# EUROPÄISCHE PATENTSCHRIFT

(11) **EP 1 540 291 B1**
(45) Veröffentlichungstag und Bekanntmachung des Hinweises auf die Patenterteilung: **23.04.2014**
(21) Anmeldenummer: 03740415.9
(22) Anmeldetag: 04.07.2003
(51) Int. Cl.: G01F 23/296

(54) **VIBRATIONS-FÜLLSTANDSSENSOR**
OSCILLATING LEVEL SENSOR
CAPTEUR DE NIVEAU A OSCILLATIONS

(30) Priorität: 17.09.2002 DE 10242970
(43) Veröffentlichungstag der Anmeldung: 15.06.2005
(73) Patentinhaber: VEGA Grieshaber KG, 77709 Wolfach (DE)
(72) Erfinder: WÖHRLE, Siegbert, 77761 Schiltach (DE)
(74) Vertreter: Patentanwälte Westphal, Mussgnug & Partner
(86) Internationale Anmeldenummer: PCT/EP2003/007164
(87) Internationale Veröffentlichungsnummer: WO 2004/034003

(56) Entgegenhaltungen:
- WO-A1-01/73383
- DE-A- 3 044 354
- DE-A- 19 835 370
- US-A- 5 895 848
- US-B1- 6 389 891

## Beschreibung

Die vorliegende Erfindung betrifft einen Füllstandssensor mit einem abstimmbaren elektrischen Schwingkreis, einem durch den Schwingkreis zu einer Resonanzstimmung anregbaren mechanischen Schwinger und einer Steuerschaltung zum Abstimmen des Schwingkreises auf eine Resonanzfrequenz des mechanischen Schwingers.

Ein Füllstandssensor dieses Typs ist aus US-A-5,895,848 und DE 44 39 879 C1 bekannt.

Das Funktionsprinzip eines solchen Füllstandssensors beruht auf der Tatsache, dass die Resonanzfrequenz des mechanischen Schwingers sich in Abhängigkeit von der Dichte und in geringem Maße von der Viskosität eines Mediums ändert, in welches der Schwinger eintaucht.

Der elektrische Schwingkreis eines solchen Füllstandssensors muss in den Grenzen der erwarteten Resonanzfrequenzen des mechanischen Schwingers abstimmbar sein. Bei Inbetriebnahme des Füllstandssensors wird der elektrische Schwingkreis ausgehend von einer Anfangsfrequenz durchgestimmt, um die aktuelle Resonanzfrequenz des mechanischen Schwingers zu ermitteln. Eine Resonanzfrequenz wird dann als gefunden angesehen, wenn zwischen der Phase einer auf den mechanischen Schwinger wirkenden Antriebskraft und der Bewegung des Schwingers eine Phasendifferenz von 90° gefunden wird. Wenn im Abstimmbereich keine solche Frequenz gefunden wird, wird angenommen, dass der mechanische Schwinger blockiert ist, z. B. durch Kontakt mit einem Fremdkörper, und eine Störung des Füllstandssensors wird erkannt.

Das Prinzip der Störungserkennung scheitert außerdem wenn durch Ablagerungen auf der Gabel, oder durch mechanische Beschädigungen an der Gabel (z.B. durch Abfressen der Gabelzinken) die Gabel verstimmt ist. In diesem Fall wird nämlich die diesem Spektralanteil entsprechende Frequenz als Resonanzfrequenz des mechanischen Schwingers erfasst. Deren Abhängigkeit von Dichte und Viskosität des den mechanischen Schwinger umgebenden Mediums kann jedoch eine völlig andere sein als bei einem unbehinderten Schwinger, so dass eine zuverlässige Füllstandsüberwachung nicht möglich ist.

Um einen Füllstandssensor der eingangs erläuterten Art, mit verschiedenen Gabelschwingern, die unterschiedliche Resonanzfrequenzen haben betreiben zu können, muss der Oszillator über einen großen Abstimmbereich verfügen. (Unterschiedliche Resonanzfrequenzen werden durch unterschiedliche Gabelgeometrien oder Beschichtungen wie z.B. Emaille hervorgerufen). Andererseits ist die Wahrscheinlichkeit, dass die Schwingbewegung eines eingeschränkt beweglichen Schwingers eine spektrale Komponente im Abstimmbereich aufweist, um so größer, je größer dieser Abstimmbereich ist. Das heißt, je weiter die Frequenzen der einzelnen Schwinger auseinanderliegen, für die ein solcher Oszillator einsetzbar ist, um so größer ist die Gefahr, dass eine Teilblockade des Schwingers unerkannt bleibt und der Füllstandssensor eventuell falsche Erfassungsergebnisse liefert.

Das Dokument WO 01/73383 A1 offenbart einen Füllstandssensor mit einem abstimmbaren elektrischen Schwingkreis, einem durch den Schwingkreis zu einer Resonanzschwingung anregbaren mechanischen Schwinger und einer Steuerschaltung zum Abstimmen des Schwingkreises auf eine Resonanzfrequenz des mechanischen Schwingers mit einer Einrichtung zum Vergleichen der Eigenfrequenzen mindestens zweier Moden des mechanischen Schwingers mit entsprechenden Soll-Eigenfrequenz-Werten und zum Feststellen einer Störung des mechanischen Schwingers, wenn dessen Eigenfrequenzen in den besagten Moden von diesen Soll-Eigenfrequenz-Werten in vorgegebener Art und Weise abweichen.

Das Dokument US 5 895 848 A offenbart einen Füllstandssensor mit einem abstimmbaren elektrischen Schwingkreis, einem durch den Schwingkreis zu einer Resonanzschwingung anregbaren mechanischen Schwinger und einer Steuerschaltung zum Abstimmen des Schwingkreises auf eine Resonanzfrequenz des mechanischen Schwingers, mit einer Einrichtung zum Vergleichen der Frequenz des mechanischen Schwingers mit einem Wert und zum Feststellen einer Störung des mechanischen Schwingers, wenn dessen Frequenz von diesem Wert in vorgegebener Art und Weise abweicht.

Eine ähnliche Einrichtung ist auch aus dem Dokument DE 198 35 370 A bekannt.

Aufgabe der vorliegenden Erfindung ist, einen Füllstandssensor zu schaffen, bei dem die Gefahr des Einrastens auf eine ungeeignete Frequenz im Falle einer teilweisen Blockade des Schwingers verringert ist. Eine weitere Aufgabe besteht darin, zu erkennen, wenn auf eine falsche Frequenz das durch mechanische Beschädigungen des Schwingers, Ablagerungen auf dem Schwinger, Kurzschluss, oder durch Leitungsbruch eingerastet wird. Dabei soll eine Störmeldung ausgegeben werden.

Die Aufgabe wird gelöst durch einen Füllstandssensor mit den Merkmalen des Anspruchs 1.

Mit der erfindungsgemäßen Anordnung ist eine Flausibilitätsprüfung möglich, durch welche erkannt wird, ob Fehler im Füllstandsermittlungssystem auftreten. Es kann beispielsweise die Amplitude der Schwingungen kleiner werden, wenn die Schwinggabel Anhaftungen des Schüttgutes aufweist. Ist die Schwinggabel kollidiert, wird die Amplitude kleiner. Dies ist mit der erfindungsgemäßen Schaltung detektierbar.

Des Weiteren können mechanische Beschädigungen an der Schwinggabel, die z.B. durch Abfressen der Gabelzinken hervorgerufen werden, erkannt werden. Findet ein Materialabtrag an den Gabelzinken statt, wird die Frequenz der Gabel höher. Ohne eine Überwachung würde dies ein Absinken des Füllstandes anzeigen. Da sich die Amplitude der Gabel bei einem Abfressen der Gabelzinken nicht in gleichem Maße verändert, wie dies bei einem Absinken des Füllstandes der Fall wäre, ist in beiden Fällen ein unterschiedliches Amplituden-Frequenz-Verhältnis zu erwarten. Wird nun das Amplituden-Frequenz-Verhältnis mit dem korrekten, beim erstmaligen Befüllen des Behälters abgespeicherten Verhältnis verglichen, kann dieser Fehlerzustand eindeutig detektiert werden.

Die Amplitude des Schwingers wird z.B. mit einem Spitzenwertgleichrichter erfasst und über einen A/D-Wandler in einen µP eingelesen. In diesem erfolgt eine Plausibilitätsprüfung. Es wird überprüft, ob die gemessene Amplitude bei der jeweiligen Schwingfrequenz einem normalen Betriebszustand entspricht, oder ob eine obengenannte Störung vorliegt.

In einer weiteren Ausführung kann als Schwellwertschaltung ein Schmitt-Trigger dienen, wobei die Schaltschwelle des Schmitt-Triggers dem Mindestwert der Amplitude entspricht.

Vorzugsweise ist der elektrische Schwingkreis mit einem den mechanischen Schwinger antreibenden elektrisch-mechanischen Wandler über ein Tiefpassfilter verbunden. Aufgabe dieses Tiefpassfilters ist, die in den elektrisch-mechanischen Wandler eingespeiste oszillierende Antriebsspannung möglichst arm an Oberschwingungen zu machen und so eine Bewegung des mechanischen Schwingers anzuregen, die ihrerseits arm an Oberschwingungen, Summen- und Differenzfrequenzen ist. Insbesondere die Unterdrückung der Differenzfrequenzkomponenten ist wichtig, da bei diesen die Möglichkeit besteht, dass sie in den Abstimmfreguenzbereich des Schwingkreises fallen und deshalb als Resonanz des mechanischen Schwingers erfasst werden könnten.

Wenn der elektrisch-mechanische Wandler ein Piezoelement ist, kann das Tiefpassfilter sehr einfach gebildet sein durch einen mit dem Piezoelement in Reihe geschaltenen Widerstand und die dem Piezoelement von Natur aus immanente Kapazität.

Weitere Merkmale und Vorteile der Erfindung ergeben sich aus der nachfolgenden Beschreibung eines Aufführungsbeispiels mit Bezug auf die beigefügten Figuren. Es zeigen:
- Figur 1:: einen Schnitt durch einen Messkopf eines erfindungsgemäßen Füllstandssensors;
- Figur 2:: ein Blockschaltbild der elektrischen Komponenten des Füllstandssensors, bei dem die Amplitudenüberwachung über einen Schmitt-Trigger erfolgt;
- Figur 3:: zeitliche Verläufe von Signalen an verschiedenen Punkten der Schaltung aus Figur 2;
- Figur 4:: ein zweites Blockschaltbild - ähnlich zu Figur 2, jedoch erfolgt die Amplitudenüberwachung über einen Spitzenwertgleichrichter und A/D-Wandler im µP; und
- Figur 5:: ein beispielhaftes Diagramm, aus dem der Zusammenhang Frequenz - Amplitude für verschiedene Füllgüter erkennbar ist.

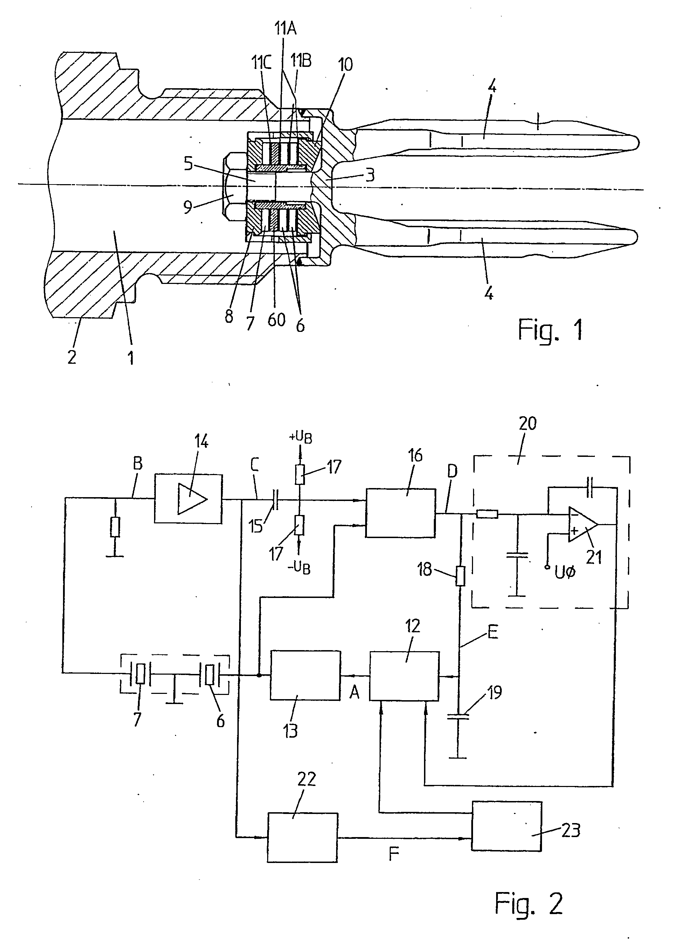

Der in Figur 1 gezeigte Messkopf ist aufgebaut aus einem im Wesentlichen becherförmigen metallischen-Einbaugehäuse 1, das zum Einschrauben in eine Öffnung eines Behälters, in der der Füllstand einer Flüssigkeit überwacht werden soll, ein Außengewinde 2 trägt. Der Boden des Bechers ist durch eine schwingfähige Membrane 3 gebildet, die an ihrer in das Behälterinnere gerichteten Außenseite zwei Gabelzinken 4 und an ihrer Innenseite einen Zugbolzen 5 trägt. Um den Zugbolzen 5 herum sind zwei Piezoelemente 6, 7 ringförmig angeordnet. Um eine höhere Sendeamplitude zu erreichen, besteht das Piezoelement 6 aus zwei parallel geschalteten Piezoringen, die durch einen metallischen Ring 11B getrennt sind. Die Piezoelemente 6, 7 werden durch einen Druckring 8 und eine auf den Zugbolzen 5 aufgeschraubte Mutter 9 gegen einen Stützring 10 gedrückt, der in direktem Kontakt mit der Mebrane 3 ist. Die elektrische Trennung der Piezoelemente 6,7, die als Sender und Empfänger fungieren, erfolgt über einen Keramikring 60. Zwischen dem Keramikring 60 und dem Piezoelement 7 ist ein metallischer Ring 11c angebracht, der die erste Elektrode für das Piezoelement 7 bildet. Der metallische Ring 11B bildet die erste Elektrode für das Piezoelement 6. Der Druckring 8 und der Stützring 10 sind über den Zugbolzen 5 elektrisch verbunden und bilden mit dem metallischen Ring 11A, der zwischen dem Keramikring 60 und dem Piezoelement 6 liegt eine gemeinsame zweite Elektrode.

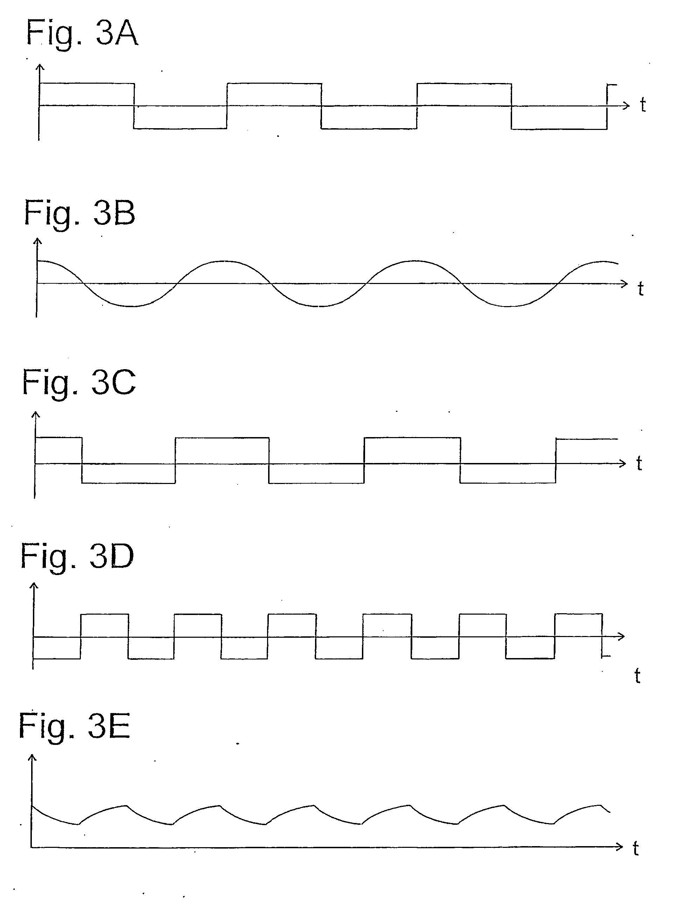

Figur 2 zeigt ein Blockdiagramm der elektronischen Komponenten des Füllstandssensors. Der Messkopf mit den Piezoelementen 6, 7 ist hier als gestricheltes Rechteck dargestellt. Das als Erreger für die Schwingung des Messkopfes fungierende Piezoelement 6 wird von einem spannungsgesteuerten Oszillator 12 über einen Impulsformer 13 angesteuert, der das in Figur 3A gezeigte, obertonreiche Rechtecksignal A des Oszillators 12 glättet und so dessen Obertonanteil reduziert. Im einfachsten Fall kann der Impulsformer ein einfacher Widerstand sein, der in Reihe mit der Kapazität des Piezoelements 6 wie ein Tiefpass wirkt.

Das Piezoelement 7 dient als mechanisch-elektrischer Wandler, der ein zur Schwingungsamplitude der Gabelzinken 4 proportionales Signal B, gezeigt in Fig. 3B, an den Eingang eines Verstärkers 14 liefert.

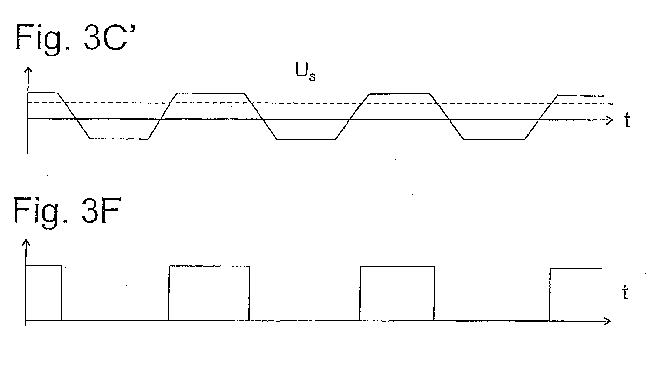

Eine geringe Schwingungsamplitude des mechanischen Schwingers genügt, um das Signal B so stark zu machen, dass es den Verstärker 14 praktisch ständig - von Zeiten des Vorzeichenwechsels abgesehen - sättigt. Der Verstärker 14 liefert daher das in Fig. 3C gezeigte rechteckförmige Ausgangssignal C.

Der Ausgang des Verstärkers 14 ist über einen Kondensator 15 mit einem ersten Eingang eines Phasendetektors 16 verbunden. Der Kondensator 15 sowie zwei Widerstände 17, die den ersten Eingang des Phasendetektors 16 mit einer positiven und einer negativen Versorgungsspannung +U_{B},-U_{B} verbinden, dienen zur Unterdrückung einer eventuellen Gleichspannungskomponente im Signal C, die aus elektromagnetischen Störungen resultieren könnte, die auf den Messkopf oder die eventuell langen Leitungsverbindungen zwischen dem Messkopf und dem Phasendetektor 16 einwirken. Dies ermöglicht die Verwendung eines einfachen Phasendetektors 16, der lediglich Vorzeichenwechsel seiner Eingangssignale auswertet.

Der zweite Eingang des Phasendetektors 16 ist mit dem Ausgang des Impulsformers 13 verbunden. Der Phasendetektor 16 liefert das in Figur 3D gezeigte Ausgangssignal D, das bei jedem Vorzeichenwechsel der zwei Eingangssignale sein Vorzeichen wechselt. Die relative Länge der positiven und negativen Impulse des Rechtecksignals D hängt von der relativen Phasenlage der Signale A, C ab; im Falle einer 90°-Phasenverschiebung, wie in Figur 3A, 3C dargestellt, sind positive und negative Impulse gleich lang.

Das Ausgangssignal wird einem Eingang des spannungsgesteuerten Oszillators 12 über ein RC-Glied bestehend aus einem zwischen den Ausgang des Phasendetektors 16 und einen Steuereingang des spannungsgesteuerten Oszillators 12 geschalteten Widerstand 18 und einem einerseits mit dem Steuereingang und andererseits mit Masse verbundenen Kondensator 19 zugeführt, so dass das am Eingang des spannungsgesteuerten Oszillators 12 anliegende Signal E den in Figur 3E gezeigten Verlauf hat. Der Phasendetektor 16 und der spannungsgesteuerte Oszillator 12 bilden so eine Phasenkoppel- oder PLL-Schleife.

Der in Figur 2 von einem gestrichelten Kästchen umgebene Phasenregler 20 ist fakultativ. Er umfasst einen Operationsverstärker 21, dessen invertierendem Eingang das Ausgangssignal D des Phasendetektors 16 über ein RC-Glied zugeführt wird, und an dessen nicht invertierendem Eingang eine einstellbare Referenzspannung Uφ anliegt. Mit Hilfe der Referenzspannung Uφ ist der Phasenwinkel zwischen den Signalen A, C vorgebbar. Das Ausgangssignal des Komparators 21 wird am spannungsgesteuerten Oszillator 12 mit dem Signal E additiv überlagert. Das heißt, der Phasenregler 20 verschiebt den Arbeitspunkt des spannungsgesteuerten Oszillators 12 so, dass der Phasenwinkel zwischen den Signalen A, C konstant bleibt. Durch Hinwirken auf einen konstanten Phasenwinkel können Schaltpunktunterschiede bei Füllgütern unterschiedlicher Viskosität ausgeglichen werden. Außerdem werden dadurch Temperatureinflüsse, die den Einstellbereich des spannungsgesteuerten Oszillators 12 verändern, kompensiert.

Das vom Verstärker 14 ausgegebene Signal C liegt ferner am Eingang eines Schmitt-Triggers 22 an, dessen Ausgang wiederum mit einem Eingang eines Mikroprozessors 23 verbunden ist. Der Schmitt-Trigger liefert ein binäres Ausgangssignal, das vom Mikroprozessor direkt verarbeitet werden kann. Wenn der Messkopf in Resonanz ist, ist das vom Piezoelement 7 gelieferte Signal B so stark, dass es den Verstärker 14 praktisch ständig gesättigt hält, so dass dessen Ausgangssignal den in Figur 3C rechteckigen Signalverlauf hat.

Wenn die Amplitude des Signals B schwächer ist, geht der Verstärker 14 nicht oder nur auf einem Teil der Schwingungsperiode in Sättigung, so dass sein Ausgangssignal den in Figur 3C gezeigten Verlauf annimmt. Die Schwelle U_{S} des Schmitt-Triggers ist in Figur 3C' als gestrichelte Linie eingezeichnet. Nur wenn das Ausgangssignal des Verstärkers 14 über dieser Schwelle liegt, liefert der Schmitt-Trigger 22 ein nichtverschwindenes Ausgangssignal F.

Der Verlauf des Ausgangssignals F des Schmitt-Triggers 22, der dem in Figur 3C' gezeigten Signals C entspricht, ist in Figur 3F gezeigt. Die Dauer der positiven Impulse des Ausgangssignals F ist um so kürzer, je geringer die Schwingungsamplitude des Messkopfes ist, und wenn diese so schwach ist, dass das Signal C die Schwelle U_{S} nicht erreicht, ist das Signal F konstant 0.

Um das Tastverhältnis des Signals F zu erfassen, genügt es, dass der Mikroprozessor 23 mit einer festen Periode, die in keinem ganzzahligen Verhältnis zur Periode der Schwingung steht, das an seinem Eingang anliegende Signal F liest. Die Häufigkeit, mit der dabei ein nichtverschwindender Pegel gelesen wird, entspricht dem Tastverhältnis. Wenn diese Häufigkeit unter einem vorgegebenem Wert liegt, der durch einen Benutzer am Mikroprozessor 23 einstellbar sein kann, liefert dieser ein diesbezügliches Warnsignal an eine Anzeige- oder Weiterverarbeitungsvorrichtung. Aus dem Vorliegen des Warnsignals kann geschlossen werden, dass entweder die PLL-Schleife noch nicht auf die Resonanzfrequenz des Messkopfes eingerastet ist, oder dass eine mechanische Störung des Messkopfes vorliegt. Eine solche mechanische Störung ist insbesondere dann anzunehmen, wenn das Warnsignal länger erzeugt wird, als der zum Durchstimmen des Oszillators 12 über seinen Abstimmbereich benötigten Zeit entspricht.

Wenn das Tastverhältnis des Signals F über dem vorgesehenen Grenzwert liegt, ist davon auszugehen, dass der Oszillator 12 auf die Resonanzfrequenz des Messkopfes eingerastet ist. In diesem Fall liest der Mikroprozessor 23 die Resonanzfrequenz des Oszillators 12 und gibt diese an die Anzeige- oder Weiterverarbeitungsvorrichtung weiter.

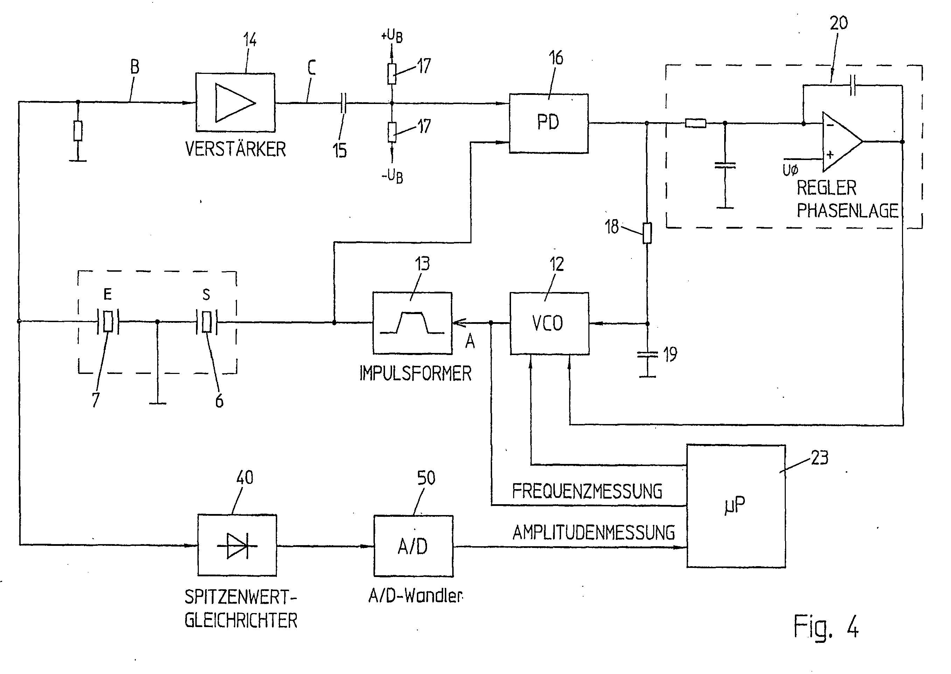

Durch das Einlesen der Frequenz über einen Schmitt-Trigger kann nur beurteilt werden, ob die Amplitude über einem bestimmten Schwellwert liegt. Um eine bessere Beurteilung der Messung durchführen zu können, ist es sinnvoll die genaue Höhe der Schwingamplitude zu kennen. Deshalb sollte die Frequenz und die Amplitude getrennt gemessen werden. Die Frequenz kann am VCO-Ausgang erfasst werden. Dies ist mit der Schaltung von Figur 4 möglich.

Die Amplitude wird direkt am Empfangspiezo abgegriffen. Mit einem Spitzenwertgleichrichter wird die Höhe der Amplitude erfasst und über einen A/D-Wandler in einen µP eingelesen.

Im µP erfolgt eine Überprüfung der Amplitude bei der jeweiligen Frequenz. Wird in einer Anlage immer das gleiche Füllgut gemessen, werden, wie in der vorliegenden Erfindung, Frequenz und Amplitude bei verschiedenen Bedeckungszuständen abgespeichert. So erhält man eine Kurve, die den Amplitudenverlauf in Abhängigkeit von der Frequenz zeigt. Während des Betriebes können so Amplitude und Frequenz immer wieder mit den abgelegten Werten verglichen werden. Auf diese Weise können auch kleine Veränderungen an der Messeinrichtung erkannt werden.

In Figur 4 ist ein ähnliches Schaltbild wie in Figur 2 gezeigt. Allerdings entfällt Schmitt-Trigger 22. Anstelle dieses Schmitt-Triggers 22 ist ein Spitzwertgleichrichter 40 mit nachgeschaltetem A/D-Wandler 50 vorgesehen. Der Eingang des Spitzenwertgleichrichters 40 ist mit dem Verbindungspunkt des Verstärkers 14 und dem Piezoelement 7 in Verbindung. Der Ausgang des Spitzenwertgleichrichters 40 ist an den Eingang des A/D-Wandlers 50 angeschlossen. Der Ausgang des A/D-Wandlers 50 ist mit einem Eingang des Mikroprozessors 23 in Verbindung. Der A/D-Wandler 50 kann auch direkt im Mikroprozessor 23 integriert sein. Der Mikroprozessor 23 kann eine Amplitudenmessung vornehmen. Eine Frequenzmessung innerhalb des Mikroprozessors 23 kann dadurch erfolgen, dass der Ausgang des VCO 12 ebenfalls mit einem Eingang des Mikroprozessors 23 in Verbindung steht. Im Übrigen entspricht das Blockschaltbild in Figur 4 dem von Figur 2.

Mit der erfindungsgemäßen Anordnung ist eine Plausibilitätsprüfung möglich, durch welche erkannt wird, ob Fehler im Füllstandsermittlungssystem auftreten. Es kann beispielsweise die Amplitude der Schwingungen kleiner werden, wenn die Schwinggabel Anhaftungen des Schüttgutes aufweist. Ist die Schwinggabel kollidiert, wird die Amplitude kleiner. Dies ist mit der erfindungsgemäßen Schaltung detektierbar.

Des Weiteren können mechanische Beschädigungen an der Schwinggabel, die z.B. durch Abfressen der Gabelzinken hervorgerufen werden, erkannt werden. Findet ein Materialabtrag an den Gabelzinken statt, wird die Frequenz der Gabel höher. Ohne eine Überwachung würde dies ein Absinken des Füllstandes anzeigen. Da sich die Amplitude der Gabel bei einem Abfressen der Gabelzinken nicht in gleichem Maße verändert, wie dies bei einem Absinken des Füllstandes der Fall wäre, ist in beiden Fällen ein unterschiedliches Amplituden-Frequenz-Verhältnis zu erwarten. Wird nun das Amplituden-Frequenz-Verhältnis mit dem korrekten, beim erstmaligen Befüllen des Behälters abgespeicherten Verhältnis verglichen, kann dieser Fehlerzustand eindeutig detektiert werden.

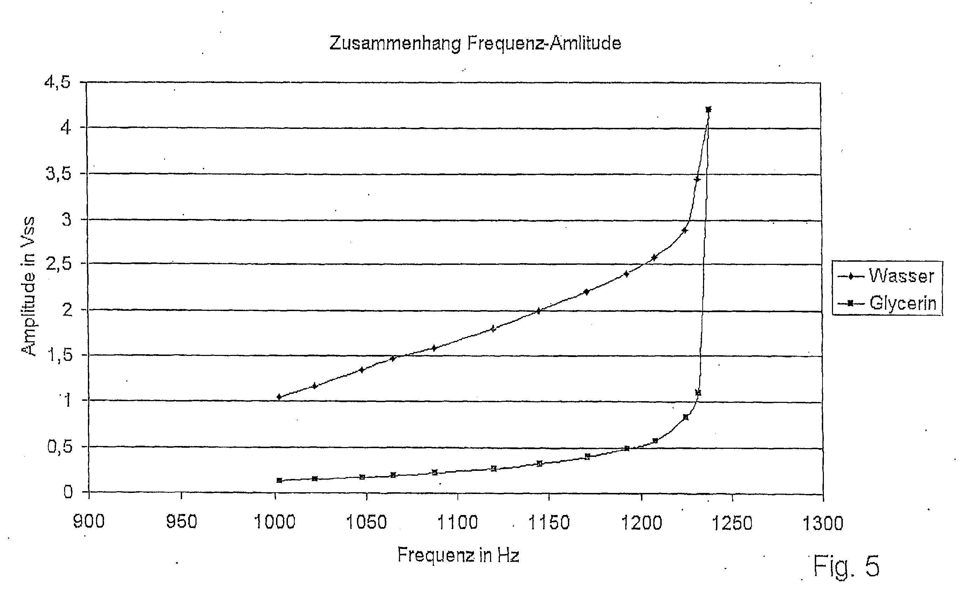

Darüber hinaus kann mit der erfindungsgemäßen Schaltungsanordnung auch detektiert werden, ob das "richtige" Füllgut in den Behälter gefüllt wird. Hierzu wird der Behälter vorab mit dem "richtigen" Füllgut langsam aufgefüllt und die Amplitude in Abhängigkeit der Frequenz abgespeichert. Dabei kann sich z.B. für das Füllgut Wasser der in Figur 5 oben dargestellten Verlauf ergeben. Dieser Verlauf wird in der erfindungsgemäßen Anordnung abgespeichert als Referenzmuster. Wird anstelle des Füllgutes Wasser z.B. das Füllgut Glycerin, welches eine erheblich höhere Viskosität als Wasser aufweist, eingefüllt, ergibt sich auch ein bestimmter Frequenz-Amplitudenverlauf des Schwingsignals. Allerdings ist das Verhältnis Amplitude - Frequenz, bei bedecktem Zustand der Gabel, deutlich geringer. Der zugehörende Verlauf ist in Figur 5 an der unteren Kurve erkennbar.

Damit kann mit der erfindungsgemäßen Anordnung auch die Art des Füllgutes sicher bestimmt werden.

## Patentansprüche

1. Füllstandssensor mit einem abstimmbaren elektrischen Schwingkreis (12), einem durch den Schwingkreis zu einer Resonanzschwingung anregbaren mechanischen Schwinger (3, 4) und einer Steuerschaltung (16, 17, 18, 19, 20) zum Abstimmen des Schwingkreises (12) auf eine Resonanzfrequenz des mechanischen Schwingers, **gekennzeichnet durch** eine Einrichtung (22, 23) zum Vergleichen des Verlaufs der Amplitude und Frequenz des mechanischen Schwingers (3, 4) mit einem Soll-Frequenz-Amplitudenverlauf und zum Feststellen einer Störung des mechanischen Schwingers (3, 4), wenn dessen Amplitude und/oder Frequenz von diesem Soll-Frequenz-Amplitudenverlauf in vorgegebener Art und Weise abweicht, wobei als Soll-Frequenz-Amplitudenverlauf der Frequenz-Amplituden-Verlauf einer Referenzmessung eines korrekten Befüllvorgangs gespeichert ist.

2. Füllstandssensor nach Anspruch 1, **dadurch gekennzeichnet, dass** die Steuerschaltung (16-20) eine PLL-Schleife (12, 16,18, 19) umfasst.

3. Füllstandssensor nach einem der vorhergehenden Ansprüche, **dadurch gekennzeichnet, dass** er einen mechanisch-elektrischen Wandler (7) zum Liefern eines zur Amplitude des mechanischen Schwingers (3,4) proportionalen-Signals umfasst, und dass die Einrichtung zum Vergleichen der Amplitude (22,23) eine Schwellwertschaltung (22) umfasst, die das vom Wandler (7) gelieferte Signal empfängt und es unterdrückt, wenn dessen Amplitude unter dem Mindestwert liegt.

4. Füllstandssensor nach Anspruch 3, **dadurch gekennzeichnet, dass** die Schwellwertschaltung (22) ein Schmitt-Trigger ist.

5. Füllstandssensor nach einem der vorhergehenden Ansprüche, **dadurch gekennzeichnet, dass** er einen mechanisch-elektrischen Wandler (7) zum Liefern eines zur Amplitude des mechanischen Schwingers (3,4) proportionalen Signals an die Steuerschaltung (16-20) über eine Signalleitung umfasst, und dass in der Signalleitung zwischen dem Wandler (7) und der Steuerschaltung (16-20) ein Hochpassfilter (15,17) angeordnet ist.

6. Füllstandssensor nach einem der vorhergehenden Ansprüche, **dadurch gekennzeichnet, dass** der elektrische Schwingkreis (12) mit einem den mechanischen Schwinger antreibenden elektrisch-mechanischen Wandler (6) über ein Tiefpassfilter (13) verbunden ist.

7. Füllstandssensor nach Anspruch 6, **dadurch gekennzeichnet, dass** der elektrisch-mechanische Wandler ein Piezoelement (6) ist, und dass das Tiefpassfilter (13) gebildet ist durch einen mit dem Piezoelement in Reihe geschalteten Widerstand und die immanente Kapazität des Piezoelements.

8. Verfahren zur Detektion einer Störung innerhalb eines Füllstandsmesssystems mit einem Füllstandssensor nach einem der Ansprüche 1 bis 7, **dadurch gekennzeichnet, dass** in einer Referenzmessung ein soll-Frequenz-Amplitudenverlauf eines korrekten Befüllvorgangs gespeichert wird und eine vorgegebene Abweichung von diesem Soll-Frequenz-Amplitudenverlauf als Störung detektiert wird.

9. Verfahren nach Anspruch 8, **dadurch gekennzeichnet, dass** das Befüllen des Behälters mit falschem Schüttgut als Störung detektiert wird.

## Claims

1. Level sensor having a tunable electrical oscillation circuit (12), a mechanical oscillator (3, 4) which can be stimulated to a resonant oscillation by the oscillation circuit and a control circuit (16, 17, 18, 19, 20) for tuning the oscillation circuit (12) to a resonant frequency of the mechanical oscillator, **characterised by** a device (22, 23) for comparison of the course of the amplitude and frequency of the mechanical oscillator (3, 4) with a set frequency/amplitude course and for detecting a fault in the mechanical oscillator (3, 4) if the amplitude and/or frequency thereof deviates from this set frequency/amplitude course in a defined manner, wherein the frequency/amplitude course of a reference measurement of a correct filling operation is stored as the set frequency/amplitude course.

2. Level sensor according to claim 1, **characterised in that** the control circuit (16-20) comprises a PLL loop (12, 16, 18, 19).

3. Level sensor according to one of the preceding claims, **characterised in that** it comprises a mechanical-electrical transducer (7) for delivering a signal which is proportional to the amplitude of the mechanical oscillator (3, 4), and **in that** the device for comparison of the amplitude (22, 23) comprises a threshold circuit (22) which receives the signal delivered by the transducer (7) and suppresses it if the amplitude thereof is below the minimum value.

4. Level sensor according to claim 3, **characterised in that** the threshold circuit (22) is a Schmitt trigger.

5. Level sensor according to one of the preceding claims, **characterised in that** it comprises a mechanical-electrical transducer (7) for delivering a signal which is proportional to the amplitude of the mechanical oscillator (3, 4) to the control circuit (16-20) via a signal lead, and **in that** a high pass filter (15, 17) is arranged in the signal lead between the transducer (7) and the control circuit (16-20).

6. Level sensor according to one of the preceding claims, **characterised in that** the electrical oscillation circuit (12) is connected via a low pass filter (13) to an electrical-mechanical transducer (6) driving the mechanical oscillator.

7. Level sensor according to claim 6, **characterised in that** the electrical-mechanical transducer is a piezo element (6), and **in that** the low pass filter (13) is formed by a resistance connected in series with the piezo element and the inherent capacitance of the piezo element.

8. Method for the detection of a fault within a level measuring system with a level sensor according to one of claims 1 to 7, **characterised in that** in a reference measurement a set frequency/amplitude course of a correct filling operation is stored and a defined deviation from this set frequency/amplitude course is detected as a fault.

9. Method according to claim 8, **characterised in that** the filling of the container with incorrect bulk goods is detected as a fault.

## Revendications

1. Détecteur de niveau comportant un circuit oscillant électrique (12) pouvant être accordé, un oscillateur mécanique (3, 4) pouvant être excité à une fréquence d'oscillation de résonance par le circuit oscillant, et un montage de commande (16, 17, 18, 19, 20) pour permettre d'accorder le circuit oscillant (12) à la fréquence de résonance de l'oscillateur mécanique,
**caractérisé par**
un dispositif (22, 23) permettant de comparer les variations de l'amplitude et de la fréquence de l'oscillateur mécanique (3, 4) avec des variations d'amplitude et de fréquence de consigne, et de coristater un défaut de l'oscillateur mécanique (3, 4) lorsque son amplitude et/ou sa fréquence s'écarte(nt) des variations d'amplitude et de fréquence de référence d'une façon prédéfinie, entant que variations d'amplitude et de fréquence de référence, les variations d'amplitude et de fréquence d'une mesure de référence d'un processus de remplissage correct étant enregistrées.

2. Détecteur de niveaux conforme à la revendication 1,
**caractérisé en ce que**
le montage de commande (16-20) comporte une boucle PLL (12, 16, 18, 19).

3. Détecteur de niveaux conforme à l'une des revendications précédentes,
**caractérisé en ce qu'**
il renferme un transformateur mécanique-électrique (7) permettant de fournir un signal proportionnel à l'amplitude de l'oscillateur mécanique (3, 4), et le dispositif de comparaison de l'amplitude (22, 23) comporte un montage de valeur de seuil (22) qui reçoit le signal transmis par le transformateur (7) et l'élimine lorsque son amplitude est inférieure à la valeur minimum.

4. Détecteur de niveaux conforme à la revendication 3,
**caractérisé en ce que**
le montage de valeur de seuil (22) est une bascule de Schmitt.

5. Détecteur de niveaux conforme à l'une des revendications précédentes,
**caractérisé en ce qu'**
il comporte un transformateur mécanique-électrique (7) permettant de fournir au montage de commande (16, 20) un signal proportionnel à l'amplitude de l'oscillateur mécanique (3, 4) par l'intermédiaire d'une conduite de signal, et, un filtre passe haut (15, 17) est monté dans cette conduite de signal entre le transformateur (7) et le montage de commande (16-20).

6. Détecteur de niveaux conforme à l'une des revendications précédentes,
**caractérisé en ce que**
le circuit oscillant électrique (12) est relié à un transformateur électrique/mécanique (6) actionnant l'oscillateur mécanique par l'intermédiaire d'un filtre passe bas (13).

7. Détecteur de niveaux conforme à la revendication 6,
**caractérisé en ce qu'**
le transformateur électrique/mécanique est un élément piézoélectrique (6), et le filtre passe bas (13) est formé par une résistance montée en série avec cet élément piézoélectrique et la capacité propre de cet élément.

8. Procédé de détection d'un défaut dans un système de mesure de niveau comportant un détecteur de niveau conforme à l'une des revendications 1 à 7,
**caractérisé en ce que**
lors d'une mesure de référence, des variations d'amplitude et de fréquence de référence d'un processus de remplissage correct sont enregistrées, et un écart prédéfini par rapport à ces variations d'amplitude et de fréquence de référence est détectée entant que défaut.

9. Procédé conforme à la revendication 8,
**caractérisé en ce que**
le remplissage du récipient avec un matériau en vrac erroné est détecté entant que défaut.
